# EUROPÄISCHE PATENTANMELDUNG

(11) **EP 4 241 558 A1**
(43) Veröffentlichungstag der Anmeldung: **13.09.2023**
(21) Anmeldenummer: 22160899.5
(22) Anmeldetag: 08.03.2022
(51) Int. Cl.: A01G 13/06, F24B 1/02, F24B 5/02, F24H 3/00, F24H 9/02, F24H 9/06

(54) **HEIZVORRICHTUNG**

(71) Anmelder: Schafler-Zorn, Simon, 8181 St. Ruprecht an der Raab (AT); Schafler-Zorn, Philipp, 8181 St. Ruprecht an der Raab (AT); Pfeifer, Christian, 8181 St. Ruprecht an der Raab (AT)
(72) Erfinder: Schafler-Zorn, Simon, 8181 St. Ruprecht an der Raab (AT); Schafler-Zorn, Philipp, 8181 St. Ruprecht an der Raab (AT); Pfeifer, Christian, 8181 St. Ruprecht an der Raab (AT)
(74) Vertreter: Ellmeyer, Wolfgang

(57) **Zusammenfassung**

Heizvorrichtung (1) für den Außenbereich mit einer mit Brennmaterial befüllbaren Heizeinheit, die einen Heizkorpus (2) mit einem Brennraum (3) und Lufteinlässen (40, 41, 42, 43) zur Luftzufuhr in den Brennraum (3) umfasst, wobei der Heizkorpus (2) an seiner Oberseite eine Befüllöffnung (5) zum Befüllen mit Brennmaterial (6) aufweist, wobei im Betrieb das Brennmaterial (6) im oberen Bereich des Brennraumes (3) zündbar ist und das Verbrennen von oben nach unten erfolgt, wobei
- der Heizkorpus (2) eine Vorderseite (7) und eine Rückseite (8) umfasst, wobei die Lufteinlässe (40, 41, 42, 43) auf der Vorderseite (7) und auf der Rückseite (8) angeordnet sind,
- die Lufteinlässe (40, 41, 42, 43) an der Vorderseite (7) und an der Rückseite (8) matrixartig in vertikalen Lufteinlassreihen (71, 72, 73, 74) und horizontalen Lufteinlasszeilen (81, 82, 83, ....88, 91, 92, 93, .....98)angeordnet sind, wobei die oberste horizontale Lufteinlasszeile (81) im Wesentlichen eine obere Grenze des Brennraumes (3) und die maximale Füllhöhe (F) definiert,
- die horizontalen Lufteinlasszeilen (81, 82, 83,....88) der Vorderseite (7) und die horizontalen Lufteinlasszeilen (91, 92, 93,....98) der Rückseite (8) in der Höhe versetzt angeordnet sind, und
- der Abstand zwischen benachbarten Lufteinlässen (40, 41, 42, 43) ein Mehrfaches des Durchmessers der Lufteinlässe (40, 41, 42, 43) beträgt.

## Beschreibung

Die Erfindung betrifft eine Heizvorrichtung für den Außenbereich mit einer mit Brennmaterial befüllbaren Heizeinheit, die einen Heizkorpus mit einem Brennraum und Lufteinlässen zur Luftzufuhr in den Brennraum umfasst, wobei der Heizkorpus an seiner Oberseite eine Befüllöffnung zum Befüllen mit Brennmaterial aufweist, wobei im Betrieb das Brennmaterial im oberen Bereich des Brennraumes zündbar ist und das Verbrennen von oben nach unten erfolgt.

Heizvorrichtungen für den Außenbereich haben eine Vielzahl von Anwendungen, von denen nachfolgend einzelne Anwendungsfälle beschrieben sind, die jedoch keinerlei Einschränkung des Schutzbereiches der Erfindung darstellen.

So sind etwa derartige Heizvorrichtungen bekannt, die im Agrarbereich eingesetzt werden.

Die durch den allgemeinen Klimawandel bedingten Wetterkapriolen haben für viele Landwirte drastische Folgen, da es immer öfter zu Spätfrost kommt, der einen enormen Einfluss auf den Ernteerfolg haben kann und damit immer öfter Maßnahmen getroffen werden müssen, um die Auswirkungen von Kälteeinbrüchen im Frühjahr insbesondere auf Blüten im Wein- und Obstbau abzuschwächen.

Zugleich gibt es naturgemäß Bestrebungen, zu diesem Zweck eingesetzte Frostschutzvorrichtungen möglichst energieeffizient, CO2-neutral und autark zu betreiben.

Bisher angewendete Schutzmaßnahmen, wie Überdachung, Frostschutzberegnung oder Warmluftzufuhr durch Gebläse oder ähnliches sind jedoch kosten- und arbeitsintensiv als auch zum Teil genehmigungspflichtig. In kleineren Anlagen, bei schwierigem Gelände und fehlender Anbindung an Versorgungsmöglichkeiten sind eine Reihe der bekannten Frostschutzmaßnahmen oftmals nicht praxistauglich bzw. nicht wirtschaftlich realisierbar.

Auch sind bekannte Frostschutzvorrichtungen im Aufbau sehr kompliziert, in der Anschaffung sehr teuer oder durch technische Nachteile relativ ineffizient. Dies ist oftmals darauf zurückzuführen, dass ein hoher Anteil an Wärmeenergie nach oben entweicht. Petrochemische Brennstoffe verursachen wiederum schädliche Abgase sowie Restmüll durch nicht wiederverwendbares Blechgebinde.

Weitere Einsatzmöglichkeiten für gattungsgemäße Heizvorrichtungen sind z.B. Terrassen- oder Balkonheizungen oder Heizungen für Gastgärten. Grundsätzlich bestehen jedoch hinsichtlich der Anwendung keine Einschränkungen.

Aufgabe der vorliegenden Erfindung ist es, eine Heizvorrichtung für den Außenbereich der eingangs genannten Art zu schaffen, die eine kostengünstige Herstellung, eine kurze Montagezeit und einen kostengünstigen Betrieb ermöglicht.

Zugleich ist es Aufgabe, eine Heizvorrichtung anzugeben, die einen hohen Wirkungsgrad, eine hohe Brenndauer sowie hohe Funktionssicherheit aufweist und die Vermeidung von schädlichen Abgasen, großen Brennrückständen und Restmüll ermöglicht.

Weitere Aufgabe ist es, eine Heizvorrichtung bereitzustellen, die eine Abgabe der erzeugten Wärmeenergie in Richtung nach oben möglichst gering hält.

Erfindungsgemäß wird dies dadurch erzielt,
- dass der Heizkorpus eine Vorderseite und eine Rückseite umfasst, wobei die Lufteinlässe auf der Vorderseite und auf der Rückseite angeordnet sind,
- dass die Lufteinlässe an der Vorderseite und an der Rückseite matrixartig in vertikalen Lufteinlassreihen und horizontalen Lufteinlasszeilen angeordnet sind, wobei die oberste horizontale Lufteinlasszeile im Wesentlichen eine obere Grenze des Brennraumes und die maximale Füllhöhe definiert,
- dass die horizontalen Lufteinlasszeilen der Vorderseite und die horizontalen Lufteinlasszeilen der Rückseite in der Höhe versetzt angeordnet sind, und
- dass der Abstand zwischen benachbarten Lufteinlässen ein Mehrfaches des Durchmessers der Lufteinlässe beträgt.

Durch die erfindungsgemäße Bauform wird ein Abbrand nur von oben ermöglicht, wodurch immer nur eine obere Schicht des im Heizkorpus vorhandenen Brennmaterials den Verbrennungsgasen ausgesetzt ist, sodass eine unkontrollierte Verbrennung vermieden wird. Hingegen wäre bei einem Abbrand von unten das oberhalb des verbrennenden Brennmaterials aufgeschichtete Material der Wärmeentwicklung ausgesetzt, wodurch sich mit der Zeit starke Gasbildung und eine Verstopfung des Heizkorpus einstellen kann. Durch die auf der Vorder- und Rückseite angeordneten, in der Höhe versetzten horizontalen Lufteinlasszeilen wird für das von oben nach unten abbrennende Material stets eine ausreichende Luftzufuhr zur Verfügung gestellt, sodass es zu einer relativ geringen Gasfreisetzung und einem sehr gleichmäßigen Brennvorgang kommt. Auch der Anzündvorgang von oben kann einfach und sicher erfolgen, da das angezündete Brennmaterial an seiner Oberseite nur mit Luft in Kontakt ist und kein darüber liegendes Material die Sauerstoffzufuhr beeinträchtigt. Ein Erlöschen der Flamme zum Zeitpunkt des Anzündens oder danach wird dadurch verhindert.

Der Heizkorpus ist so aufgebaut, dass seine Vorderseite und seine Rückseite, die maßgeblichen Flächenanteile zum Abgeben der Wärme nach außen ausbilden, während an den Schmalseiten bevorzugt nur ein geringer Flächenanteil dafür vorgesehen ist.

Das Entzünden des im Heizkorpus eingefüllten Brennmaterials an seiner Oberseite hat zur Folge, dass Luft über die Lufteinlässe an der Vorderseite und an der Rückseite angesaugt wird, um der Verbrennung zugeführt zu werden und danach die Verbrennungsgase nach oben entweichen. Die im Bereich des brennenden Brennmaterialvolumens vorhandenen Lufteinlässe werden jeweils den größten Anteil an Luftzufuhr beitragen im Vergleich zu weiter unten angeordneten Lufteinlässen, wo der Luftstrom durch aufgestapeltes Brennmaterial behindert wird. Mit der Zeit brennt das Material ab, sodass die sich ausbildende Glutzone innerhalb des Heizkorpus stetig nach unten wandert, wobei dann weiter unten angeordnete Lufteinlässe an der Vorderseite und der Rückseite, die gerade auf gleicher Höhe wie die Brennzone liegen, die Hauptluftzufuhr übernehmen. Durch geeignete Wahl des Brennmaterials können die Brennrückstände wie Asche sehr klein gehalten werden und es können besonders umweltfreundliche, nachwachsende Rohstoffe zum Einsatz gelangen.

Die Anzahl der Lufteinlässe an der Vorderseite und der Rückseite bzw. der Abstand zwischen den Lufteinlässen sowie die Größe der Lufteinlässe unterliegen im Rahmen der Erfindung keiner Einschränkung und können den jeweiligen Bedürfnissen angepasst bzw. optimiert werden.

Jedoch ist insofern beim Abstand von benachbarten Lufteinlässen eine untere Grenze gegeben, als dieser Abstand ein Mehrfaches, mindestens ein Vier- bis Fünffaches des Durchmessers eines Lufteinlasses beträgt, da sonst der Abbrand unkontrolliert erfolgen würde. Damit ist auch eine bekannte Lochblechanordnung mit eng beabstandeten Lufteinlässen ausgeschlossen. Sowohl die Beabstandung der Lufteinlässe in den horizontalen Lufteinlasszeilen als auch in den vertikalen Lufteinlassreihen beeinflusst die Abbrandgeschwindigkeit maßgeblich, wobei eine eng benachbarte Anordnung von Lufteinlässen tunlichst zu vermeiden ist, weshalb auch der oben genannte Mindestabstand zwischen den Lufteinlässen für die Funktion der erfindungsgemäßen Heizvorrichtung wesentlich ist.

Durch Wahl der Dimensionen des Heizkorpus, insbesonders Brennraumhöhe, der Anzahl, Form und Größe sowie Anordnung der Lufteinlässe, somit Lufteinlassgesamtfläche kann das Abbrennverhalten hinsichtlich Dauer des Abbrandes, Wärmeentwicklung und Abstrahlungsrichtung entsprechend variiert und eingestellt werden. Es sind somit keine Regelvorrichtungen, händisch oder automatisch verstellbare Luftklappen erforderlich, um einen hohen Wirkungsgrad und lange Brennzeiten zu gewährleisten.

Die obere Grenze des Brennraums wird durch die oberste horizontale Lufteinlasszeile definiert, wobei zwischen der Unterkante des Brennraumes und dieser oberen Grenze horizontale Lufteinlasszeilen voneinander beabstandet angeordnet sind und zusammen mit den vertikalen beabstandeten Lufteinlassreihen die matrixartige Anordnung der Lufteinlässe erzeugen.

Durch die Höhenversetzung der horizontalen Lufteinlasszeilen an der Vorder- und Rückseite der erfindungsgemäßen Heizvorrichtung wird die Luft, die von einer horizontalen Lufteinlasszeile von einer Seite einströmt auf den gegenüberliegenden geschlossenen Flächenbereich geleitet, der aufgrund der Höhenversetzung keine Lufteinlässe auf dieser Höhe aufweist, wodurch sich dieser Flächenbereich stark erhitzt und dadurch lokal zum Aufglühen gebracht und die Wärmestrahlung nach außen über die Vorderseite und Rückseite dadurch unterstützt wird.

Gemäß einer weiteren Ausbildung der Erfindung kann das Ausmaß v der Höhenversetzung der horizontalen Lufteinlasszeilen auf der Vorderseite gegenüber den horizontalen Lufteinlasszeilen der Rückseite im Wesentlichen gleich dem halben Vertikalabstand z zwischen den Lufteinlässen sein, wodurch ein mit dem Verbrennungsvorgang fortschreitender sehr gleichmäßiger Abbrand mit sehr guter Wärmestrahlwirkung erfolgt.

Auch die Anzahl von nebeneinander angeordneten Lufteinlassreihen an der Vorder- und Rückseite unterliegt keinerlei Einschränkungen.

Gemäß einem bevorzugten Ausführungsbeispiel der Erfindung kann vorgesehen sein, dass an der Vorderseite des Heizkorpus zwei vertikale Lufteinlassreihen und an der Rückseite des Heizkorpus zwei vertikale Lufteinlassreihen ausgebildet sind.

Dadurch lässt sich ein sehr gleichmäßiger Abbrand und sehr hohe Wärmeabstrahlung über die Vorder- und Rückseite erzielen.

Durch die erfindungsgemäße Anordnung der Lufteinlässe kann im Falle eines quadratischen oder rechteckförmigen Querschnitts die Vorder- und die Rückseite jeweils eine Primärheizfläche ausbilden, und die Vorder- und Rückseite verbindende Seitenflächen jeweils eine Sekundärheizfläche ausbilden, wobei auf den geschlossenen Flächenbereich der Primärheizfläche bezogen der Anteil der offenen Fläche der in der Primärheizfläche vorhandenen Einlasslöcher 0,3% bis 1,1% beträgt.

Gemäß einer bevorzugten Weiterbildung der Erfindung kann die Breite der Sekundärheizfläche gleich x und die Breite der Primärfläche gleich 2x sein, und in weiterer Ausbildung kann der Vertikalabstand z zwischen den horizontalen Lufteinlasszeilen gleich x sein und der Horizontalabstand der vertikalen Lufteinlasszeilen gleich x plus/minus 20% sein.

Beispielsweise bei einer Anwendung der erfindungsgemäßen Heizvorrichtung als Frostschutzvorrichtung wird eine möglichst lange Brenndauer angestrebt, z.B. während der Nacht, während der die Heizvorrichtung ohne Beaufsichtigung oder Nachfüllen die ganze Zeit über gleichmäßige Wärme abgibt. In dieser Hinsicht als vorteilhaft hat sich eine schlanke Ausführung der Heizvorrichtung erwiesen, wobei gemäß einer weiteren Ausbildung der Erfindung der Heizkorpus einen im Wesentlichen rechteckförmigen Querschnitt aufweisen kann, und wobei das Verhältnis von Höhe h des Brennraums zu Brennraumquerschnitt q größer als 10, vorzugsweise größer als 50, ist.

Vorteilhaft hat es sich ferner erwiesen, wenn gemäß einem Ausführungsbeispiel der Erfindung der Durchmesser der Lufteinlässe A gleich 1/10 von x plus/minus 10% ist. Dadurch lässt sich ein sehr gleichmäßiger Abbrand erzielen.

Um die erfindungsgemäße Heizvorrichtung vor Umwelteinflüssen wie etwa Regen oder Schnee zu schützen und darüber hinaus eine bessere Wärmeableitung in horizontaler Richtung, z.B. in Richtung von zu schützenden Kulturen zu ermöglichen, kann in weiterer Fortbildung der Erfindung vorgesehen sein, dass der Heizkorpus an seiner Oberseite eine abnehmbare Abdeckung aufweist, wobei die abnehmbare Abdeckung durch Abstandhalter zur Oberkante des Heizkorpus derart beabstandet angeordnet ist, dass eine Abzugsöffnung zum Abziehen der Verbrennungsgase ausgebildet ist.

Auf diese Weise kann einerseits der Brennvorgang ungestört von äußeren Einflüssen ablaufen zugleich aber auch die erwünschte Wärmeabgabe in seitliche Richtung unterstützt werden, wodurch sich der Wirkungsgrad der erfindungsgemäßen Vorrichtung erhöht.

Ein weiterer Nachteil von bisher bekannten Außenbereich-Heizungen ist die Anbringung derselben im möglicherweise hügeligen Gelände, wo üblicherweise erst eine Standfläche geschaffen werden muss, um die Heizvorrichtung aufstellen zu können. Hier kann gemäß einem weiteren Ausführungsbeispiel der Erfindung vorgesehen sein, dass der Heizkorpus an einer im Boden verankerbaren Stütze befestigt ist, wodurch eine sichere und platzsparende Anbringung ermöglicht wird und auch das Kippen der erfindungsgemäßen Heizvorrichtung bei extremen Hangneigungen oder großen Windstärken ausgeschlossen wird. Damit kann eine Beschädigung der Heizvorrichtung oder auch der zu schützenden Kulturpflanzen, Plantagenelementen usw. verhindert werden.

Darüber hinaus kann in weiterer Ausbildung der Erfindung der Heizkorpus an der verankerbaren Stütze abnehmbar durch Formschluss befestigt sein, wobei der Heizkorpus eine Aufnahme aufweist, mit der der Heizkorpus auf die Stütze aufsetzbar ist. Durch die schraubenlose Befestigung wird das Aufstellen und Abbauen der erfindungsgemäßen Heizvorrichtung stark vereinfacht, sobald die entsprechenden Stützen im Boden bereits vorgesehen sind. Die Aufstellung kann auch durch nicht speziell ausgebildete Hilfskräfte erfolgen. Während der Warmwettersaison kann die erfindungsgemäße Heizvorrichtung, wenn sie nicht benötigt wird, sehr einfach abgenommen werden, und bei geeigneter schlanker Bauweise z.B. zwischen den Kulturpflanzen verwahrt werden, wo sie bei Pflegearbeiten für Mensch und Maschine nicht im Weg ist, sodass auf diese Weise Transportwege und Lagerfläche entfallen. Bei Herstellung der Heizvorrichtung in Leichtbauweise kann diese von einer einzigen Person allein ohne großen Arbeitsaufwand angebracht und entfernt werden.

Die Anbringung mittels verankerbarer Stütze schließt jedoch andere Anbringungsarten nicht aus, so können auch Standfüße an der Unterseite der erfindungsgemäßen Heizvorrichtung vorgesehen sein, wobei auch eine seitliche Fixierung der Heizvorrichtung über eine Stange oder ein Seil angebracht sein kann.

Die erfindungsgemäße Heizvorrichtung hat darüber hinaus den Vorteil eines sehr einfachen Aufbaus, der eine konstruktiv einfache Bauweise ermöglicht. Der Heizkorpus kann z.B. in Form eines in vertikaler Richtung ausgerichteten Rohrprofils ausgebildet sein, wodurch eine vorteilhafte schlanke Ausführung ermöglicht wird. Da keine Wärmespeicherung erforderlich ist, sondern die erzeugte Wärme unmittelbar nach außen abgegeben werden soll, kann auch auf Wärmespeicherelemente, z.B. aus Schamott, verzichtet werden und eben ein einfaches Rohrelement z.B. aus Metall verwendet werden, in dem die Lufteinlassreihen in erfindungsgemäßer Weise sehr einfach ausgebildet sein können. Da weder eine Ofentür noch unbedingt ein Rost erforderlich ist und die erfindungsgemäße Heizvorrichtung auf einfache Weise durch Befüllen des oben offenen Rohrelements von oben erfolgen kann, ist somit eine einfache Herstellung möglich. Weiters ergibt sich ein kostengünstiger Betrieb, da keine Verschleißteile vorliegen.

Um den Herstellungsvorgang der erfindungsgemäßen Heizvorrichtung noch weiter zu vereinfachen und kostengünstiger zu gestalten, kann gemäß einer weiteren Ausführungsform der Erfindung der Heizkorpus aus zumindest zwei Profilteilen zusammengesetzt sein, z.B. kann ein C-förmiger Profilteil vorgesehen sein, welcher die Rückseite des Heizkorpus beinhaltet und ein Hut-Profilteil vorgesehen ist, welcher die Vorderseite des Heizkorpus beinhaltet, und wobei die zwei Profilteile an Längsseiten miteinander verbunden sind. Dies ermöglicht die einfache Herstellung aus z.B. Metallblech oder entsprechenden vorgeformten Metallprofilteilen. Es können aber auch andere Profilformen, wie z.B. L-Profile zu dem Heizkorpus zusammengesetzt, z.B. genietet werden.

Zum Zwecke der Verbesserung der ästhetischen Wirkung können in bekannter Weise Teile von Seitenwänden oder Seitenwände aus feuerfestem Glas vorgesehen sein, um die Möglichkeit einer Beobachtung des Abbrands vorzusehen. Gemäß dem Erfindungsprinzip sind dann die Lochreihen zumindest teilweise in der verwendeten Glasplatte ausgebildet, um die seitliche Luftzufuhr zu ermöglichen.

Besonders einfach ist die Befüllung der erfindungsgemäßen Heizvorrichtung von oben, wenn gemäß einer weiteren Ausbildung der Erfindung das Brennmaterial in Form von Holzpellets vorliegt, da mit diesen der Innenraum des Heizkorpus sehr gut ohne Leerstellen aufgefüllt werden kann. Insbesondere können Holzpellets auch gepumpt werden, falls ein entsprechender Vorratswagen mit Schlauch zur Verfügung steht. Das Brennmaterial kann auch in anderer Form vorliegen, wie Holzscheite, Holzabfall, Holzschnitzel etc. und ist nicht auf Holz allein beschränkt.

Es kann aber auch vorgesehen sein, dass der Brennraum ein Volumen aufweist, das dem Inhalt eines Einheits-Sackes Pellets entspricht, sodass das Hilfspersonal einfach jeweils nur einen ganzen Sack dieses Brennmaterials von oben einfüllen kann.

Durch den z.B. mit Holzpellets erzielbaren fast vollständigen Abbrand fällt auch beim Verbrennungsvorgang sehr wenig Asche an, sodass gemäß einer weiteren Ausführungsform der Erfindung der Heizkorpus an seiner Unterseite im Wesentlichen geschlossen sein kann, wobei gegebenenfalls die Heizkorpusunterseite aus einer gelochten Platte oder einem Rost gebildet sein kann, um Asche abzuführen. Daher kann auch die Unterseite der erfindungsgemäßen Heizvorrichtung konstruktiv sehr einfach aufgebaut sein. Für den Verbrennungsvorgang müssen an der Unterseite keine Lufteinlässe vorgesehen sein. Der Heizkorpus kann, wie bereits erwähnt sich z.B. auch aus zwei L-Profilen zusammensetzen.

Gemäß einer weiteren Variante der Erfindung können die Lufteinlässe kreisförmig sein, und der Durchmesser in einem Bereich 8 mm (Öffnungsfläche 50 mm2) bis 16 mm (Öffnungsfläche 200 mm2) liegen, oder die Lufteinlässe quadratisch sind und die Öffnungsfläche im Bereich von 60 mm2 bis 260 mm2 liegen. Die geometrische Form der Lufteinlässe unterliegt keinerlei Einschränkungen und ist hauptsächlich durch möglichst einfache Herstellungsweise bestimmt.

Wie bereits erwähnt, kann durch die Wahl der Größe der Lufteinlässe und ihren gegenseitigen Abstand eine Beeinflussung des Abbrandverhaltens erzielt werden.

Es hat sich dabei gemäß einem weiteren Ausführungsbeispiel der Erfindung als vorteilhaft herausgestellt, dass das Verhältnis von Abstand zwischen benachbarten Lufteinlässen und dem Durchmesser der Lufteinlässe von 8 bis 12 beträgt. Es kann dieses Verhältnis im Rahmen der Erfindung aber auch außerhalb der genannten Grenzen gewählt werden.

Die Erfindung betrifft weiters die Verwendung einer erfindungsgemäßen Heizvorrichtung als Frostschutzvorrichtung zum Schutz von Pflanzen gegen Auswirkungen von Kälte und Frost.

Die Erfindung betrifft weiters die Verwendung einer erfindungsgemäßen Heizvorrichtung als Terrassen-, Balkon- oder Gastgartenheizung.

Wie bereits erwähnt ergibt sich aus der Angabe dieser zwei Anwendungsfälle keine Beschränkung des Schutzbereiches der Erfindung, jegliche anderen Anwendungen sind in diesem enthalten.

Nachfolgend wird die Erfindung anhand der in den Zeichnungen dargestellten Ausführungsbeispiele eingehend erläutert. Es zeigt dabei
Fig.1, 2 und 3 eine Vorder-, Seiten- und Rückansicht einer Ausführungsform einer erfindungsgemäßen Heizvorrichtung;
Fig.4 einen Schnitt A-A durch eine Heizvorrichtung gemäß Fig.1 und Fig.5 einen Schnitt A-A mit einer befüllten Heizvorrichtung gemäß Fig.1;
Fig.6 und 7 die Vorder- und Seitenansicht gemäß Fig.1 mit Dimensionierungen und
Fig.8 einen schematischen Längsschnitt durch die erfindungsgemäße Heizvorrichtung gemäß Fig.1.

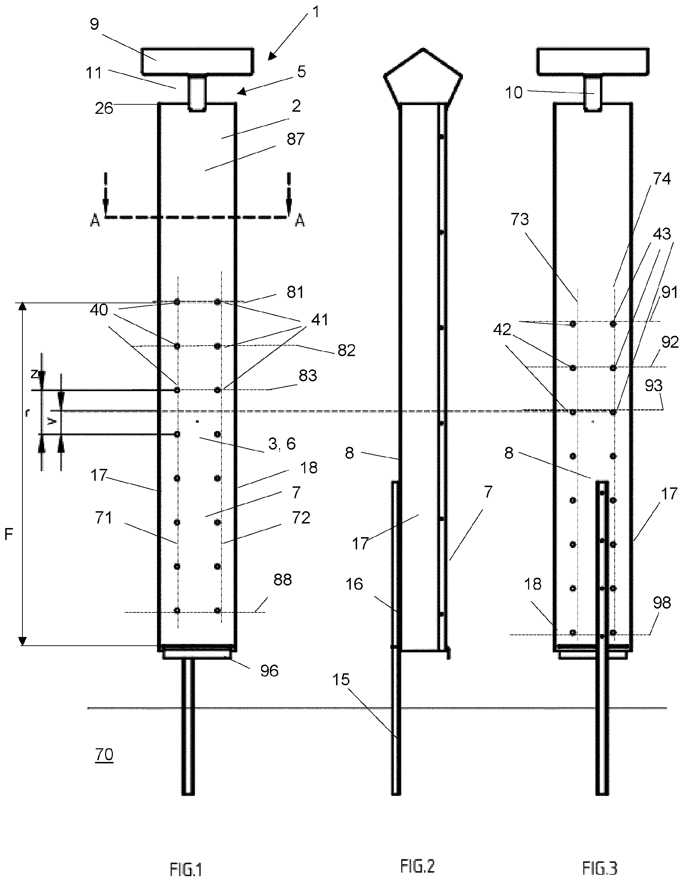

Fig.1, 2 und 3 zeigen eine Heizvorrichtung 1 für den Außenbereich, die eine mit Brennmaterial 6 befüllbare Heizeinheit aufweist. Die Heizeinheit besteht aus einem einen Brennraum 3 umfassenden Heizkorpus 2 und Lufteinlässen 40, 41, 42, 43, die der Luftzufuhr in den Brennraum 3 dienen.

Der Heizkorpus 2 weist an seiner Oberseite eine abnehmbare Abdeckung 9 auf, die durch Abstandhalter 10 zur Oberkante 26 des Heizkorpus 2 derart beabstandet angeordnet ist, dass eine Abzugsöffnung 11 zum Abziehen der Verbrennungsgase ausgebildet ist. In der Praxis hat sich ein Abstand von z.B. 10 cm zwischen Oberkante 26 des Heizkorpus 2 und der Abdeckung 9 als vorteilhaft erwiesen.

Der Heizkorpus 2 ist an einer im Boden 70 verankerten Stütze 15 befestigt, wobei der Heizkorpus 2 an der Stütze 15 abnehmbar durch Formschluss befestigt ist, und der Heizkorpus 2 eine Aufnahme 16 aufweist, mit der der Heizkorpus 2 auf die Stütze 15 aufsetzbar ist. Der Heizkorpus 2 ist in der in Fig.1 bis 5 gezeigten Gebrauchsstellung mit seiner Längsachse vertikal ausgerichtet.

Der Heizkorpus 2 ist an seiner Unterseite mit einer gelochten Platte 196 oder einem Rost abgeschlossen, um Asche abzuführen. Die gelochte Platte 196 ist zu Reinigungszwecken ausziehbar angebracht.

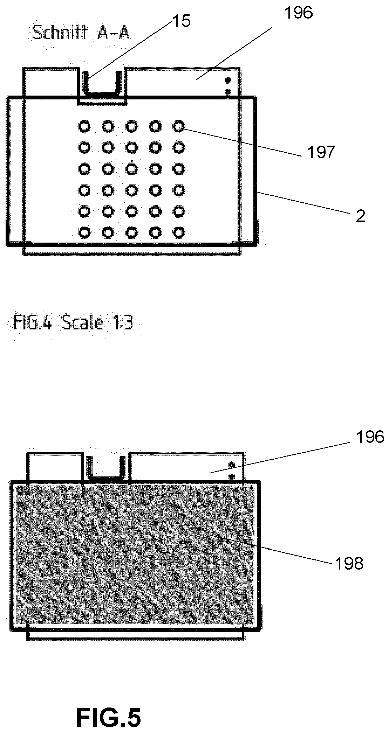

Über Löcher 197 der gelochten Platte 196 kann die bei der Verbrennung anfallende Asche nach unten entweichen. Sobald der Brennstoff-Füllstand durch Verbrennung unterhalb die unterste horizontale Lufteinlasszeile abgesunken ist, kann über die Luftzufuhr durch die Löcher 197 der gelochten Platte 196 ein Nachverbrennungsvorgang des restlichen Materials und/oder Asche entstehen, da nunmehr Luft von unten durch die Löcher 197 der gelochten Platte 196 eindringen und die Verbrennung dieser Restmasse fördern kann (Fig.4, 5).

Da als Brennmaterial 6 bevorzugt Holzpellets 198 eingesetzt werden, kann aber aufgrund der dabei sehr geringen Brennrückstände auch auf eine Lochplatte oder einen Rost verzichtet werden.

Der Heizkorpus 2 weist an seiner Oberseite eine Befüllöffnung 5 zum Befüllen mit Brennmaterial 6 auf, die nach Abnehmen der Abdeckung 9 für den Befüllvorgang zugänglich wird, wobei im Betrieb das Brennmaterial 6 im oberen Bereich des Brennraumes 3 zündbar ist und das Verbrennen von oben nach unten erfolgt. Die Befüllöffnung 5 ist durch das obere offene Ende, z.B. Rohrende, des Heizkorpus 2 gebildet.

Der Heizkorpus 2 weist eine Vorderseite 7 und eine Rückseite 8 auf, an denen die Lufteinlässe 40, 41, 42, 43 angeordnet sind, wobei die Lufteinlässe 40, 41 sowie 42, 43 an der Vorderseite 7 bzw. an der Rückseite 8 matrixartig in vertikalen Lufteinlassreihen 71, 72 und 73, 74, die parallel zur Längsachse des Heizkorpus 2 verlaufen, und horizontalen Lufteinlasszeilen 81, 82, 83, ....88 und 91, 92, 93, ....98 angeordnet sind, wobei die oberste horizontale Lufteinlasszeile 81 an der Vorderseite 7 im Wesentlichen eine obere Grenze B des Brennraumes 3 und die maximale Füllhöhe F des Brennraumes 3 definiert.

Der Abstand zwischen benachbarten Lufteinlässen 40, 41 bzw. 42, 43 beträgt ein Mehrfaches, mindestens ein Vier- bis Fünffaches des Durchmessers der Lufteinlässe 40, 41, 42, 43.

Die horizontalen Lufteinlasszeilen 81, 82, 83,....88 der Vorderseite 7 und die horizontalen Lufteinlasszeilen 91, 92, 93,....98 der Rückseite 8 sind in der Höhe versetzt angeordnet.

Im gezeigten Ausführungsbeispiel sind die zwei vertikalen Lufteinlassreihen 70, 71 an der Vorderseite 7 des Heizkorpus 2 und die zwei vertikalen Lufteinlassreihen 73, 74 fluchtend dazu an der Rückseite 8 angeordnet.

Die Anzahl der vertikalen Lufteinlassreihen und der horizontalen Lufteinlasszeilen an der Vorder- und Rückseite ist im Rahmen der Erfindung nicht eingeschränkt und kann auch anders als hierin gezeigt gewählt werden, es hat sich aber als vorteilhaft herausgestellt, die horizontalen Lufteinlasszeilen über die obere Grenze B des Brennraumes 3 gleichmäßig verteilt anzuordnen. Oberhalb des Brennraumes 3 setzt sich der Heizkorpus 2 als Kaminabschnitt 87 fort, die Höhe K des Kaminabschnittes 87 kann variieren, der Brennraum 3 endet mit der obersten horizontalen Lufteinlasszeile 81, von wo der Kaminabschnitt 87 sich bis zur Oberkante 26 des Heizkorpus 2 fortsetzt. In bevorzugter Weise wird mindestens die halbe Höhe bis 2/3 der Höhe des Heizkorpus 2 als Brennraum 3 ausgebildet sein, was durch die Anzahl der vorgesehenen horizontalen Lufteinlasszeilen eingestellt werden kann, im gezeigten Ausführungsbeispiel sind bei zwei vertikalen Lufteinlassreihen 71, 72 und 73, 74 insgesamt acht gleich beabstandete, horizontale Lufteinlasszeilen 81, 82, 83,..., 88 auf der Vorderseite 7 und acht gleich beabstandete, horizontale Lufteinlasszeilen 91, 92, 93...., 98 auf der Rückseite 8 vorgesehen, die über die gesamte Höhe F des Brennraumes 3 verteilt sind, somit jeweils sechzehn Lufteinlässe auf Vorder- und Rückseite.

Der Heizkorpus 2 kann auch zweiteilig ausgebildet sein, sodass der Kaminabschnitt 87 z.B. auf den Brennraum 3 aufsteckbar ist.

Im gezeigten Ausführungsbeispiel ist das Ausmaß v der Höhenversetzung zwischen den horizontalen Lufteinlasszeilen 81, 82,83,....,88 der Vorderseite 7 und den horizontalen Lufteinlasszeilen 91, 92, 93..., 98 der Rückseite 8 im Wesentlichen gleich dem halben Vertikalabstand z zwischen den Lufteinlässen 40, 41, 42, 43.

Die Lufteinlässe 40, 41, 42, 43 sind bevorzugt kreisförmig, wobei der Durchmesser in einem Bereich von 8 mm (Öffnungsfläche 50 mm2) bis 16 mm (Öffnungsfläche 200 mm2) liegt, vorzugsweise 13 mm beträgt. Alternativ dazu können die Lufteinlässe 40, 41, 42, 43 aber auch z.B. einen quadratischen (z.B. 20 x 20 mm) oder einen anderen geometrischen Querschnitt aufweisen.

Aufgrund des rechteckförmigen Querschnitts des Heizkorpus 2 und der Anordnung der Lufteinlässe bilden die Vorder- und die Rückseite 7, 8 jeweils eine Primärheizfläche mit Lufteinlässen aus, während die geschlossenen Seitenflächen 17, 18, welche die Vorder- und Rückseite 7, 8 verbinden, jeweils eine Sekundärheizfläche ausbilden, wobei auf den geschlossenen Flächenbereich der Primärheizfläche bezogen der Anteil der offenen Fläche der in der Primärheizfläche vorhandenen Einlasslöcher 0,3% bis 1,1% beträgt.

Beispiel:
Fläche je Primärheizfläche 204250mm2
16 Einlasslöcher zu je 50,27mm2 ergibt 804,25mm2
Anteil offener Fläche = 0,39%

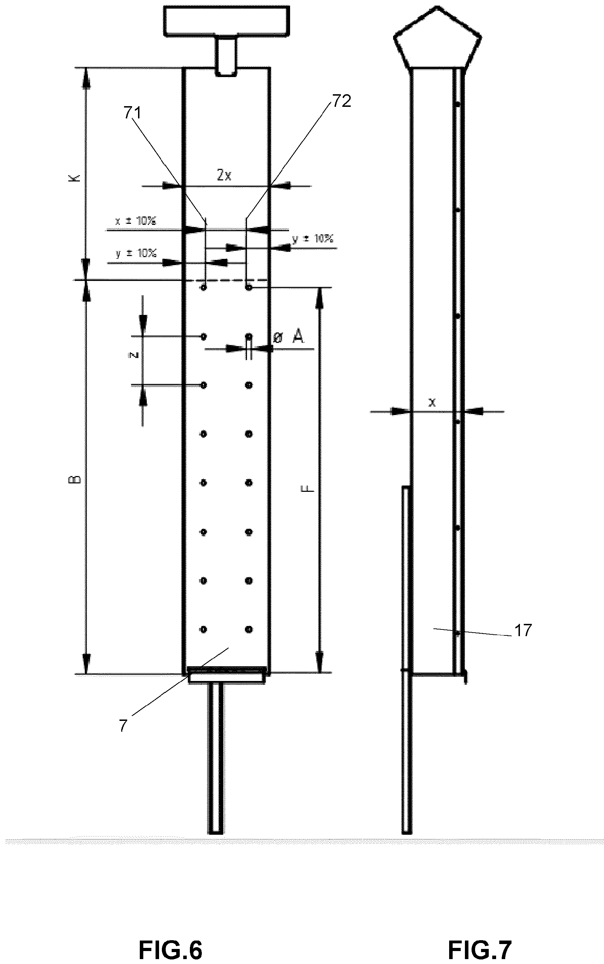

Fig. 6,7 zeigen die im Ausführungsbeispiel gewählten Dimensionierungen, wobei die Breite der Sekundärheizfläche 17, 18 gleich dem Wert x und die Breite der Primärfläche 7, 8 gleich 2x ist.

Der Wert x kann z.B., ohne darauf beschränkt zu sein, 12 cm betragen.

Der Vertikalabstand z zwischen den horizontalen Lufteinlasszeilen 81, 82, 83,..., 88 und 91, 92, 93....,98 ist ebenfalls gleich x und der Horizontalabstand der vertikalen Lufteinlassreihen 71, 72, 73, 74 ist gleich x plus/minus 20%.

Der Durchmesser der Lufteinlässe A ist gleich 1/10 von x plus/minus 10%.

Der Heizkorpus unterteilt sich in eine Brennkammer entlang dem Höhenmaß B (0,95m) und einen Kaminabschnitt (0,55m) entlang dem Höhenmaß K.

Abstand y ist jeweils der Abstand zwischen der Außenkante und der benachbarten vertikalen Lufteinlassreihe 71, 72, wobei 2x = y (plus/minus 10%) plus x (plus/minus 10%) plus y (plus/minus 10%) .

Die für Fig.6, 7 angegebenen Dimensionen haben sich als vorteilhaft herausgestellt, können im Rahmen der Erfindung aber variieren.

Das Verhältnis von Abstand x in der horizontalen Lufteinlasszeile oder z in der vertikalen Lufteinlassreihe zwischen den Lufteinlässen 40, 41, 42, 43 und dem Durchmesser/der Weite der Lufteinlässe kann z.B. im Bereich zwischen 8 bis 12 liegen.

Die Verwendung der erfindungsgemäßen Heizvorrichtung 1 kann in Form einer Frostschutzvorrichtung zum Schutz von Pflanzen gegen Auswirkungen von Kälte und Frost oder als Terrassen-, Balkon- oder Gastgartenheizung oder in anderer Weise erfolgen.

Der Heizkorpus 2 ist in einer schmalen, schlanken Bauart ausgeführt, wodurch er z.B. für den Frostschutz in Obstanbaugebieten sehr gut geeignet ist, da er aufgrund seiner Abmessungen einen langen Abbrand sicherstellt und auch wenig an Grundfläche in Anspruch nimmt, sodass er z.B. jeweils zwischen zwei Reben oder Bäumen aufgestellt werden kann.

Wie in Fig.4 gezeigt weist der Heizkorpus 2 einen im Wesentlichen rechteckförmigen, rohrförmigen Querschnitt auf, wobei an der Vorderseite 7 und Rückseite 8 des Querschnitts der Hauptanteil der Wärmestrahlung abgegeben wird, und der Heizkorpus 2 entsprechend positioniert werden kann, um hauptsächlich in Richtung der Längsseiten abzustrahlen. Die Form des Querschnitts ist im Rahmen der Erfindung jedoch nicht eingeschränkt.

Vorzugsweise ist das Verhältnis von Höhe F des Brennraums 3 in m zu Brennraumquerschnitt q in m2 größer als 10, vorzugsweise größer als 50. Im gezeigten Ausführungsbeispiel ist die Höhe F 0,95m und der Brennraumquerschnitt 0,02 m2. Wie bereits erwähnt bestehen bei der Dimensionierung der Höhe und des Querschnitts im Rahmen der Erfindung keine Einschränkungen.

Der Heizkorpus 2 ist aus zwei Profilteilen, z.B. zwei L-förmigen Profilteilen zusammengesetzt, z.B. genietet. Jegliche andere Form der Profilgestaltung ist aber im Rahmen der Erfindung möglich.

Die Aufnahme 16 für die Stütze 15 ist an der Schmalseite des Heizkorpus 2 befestigt. Zumindest Teile der Vorderseite 7 oder der Rückseite 8 können als wärmefeste transparente Glasplatte ausgeführt sein, um im Fall einer Terrassenheizung den Abbrandvorgang mitverfolgen zu können.

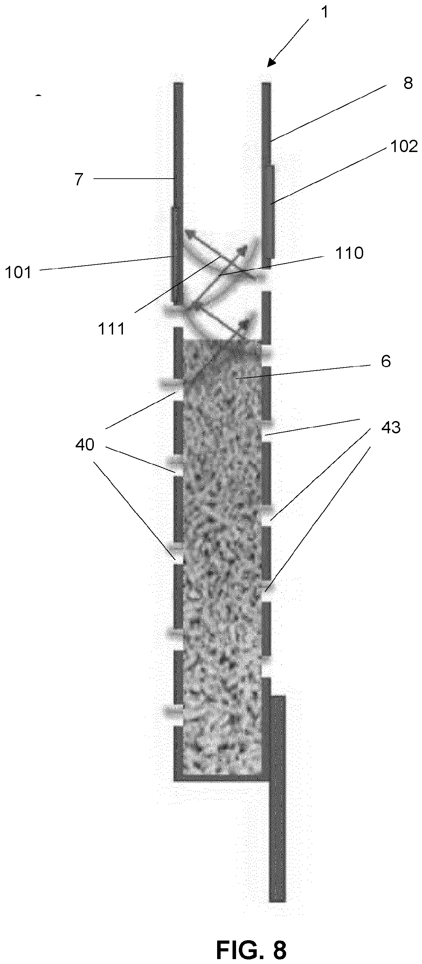

Fig.8 zeigt schematisch das Wirkprinzip der erfindungsgemäßen Heizvorrichtung 1, wobei der Längsschnitt durch die vertikalen Lufteinlassreihen 71, 74 auf der Vorderseite 7 und der Rückseite 8 verläuft. Durch die auf der Vorder- und Rückseite angeordneten, in der Höhe versetzten horizontalen Lufteinlasszeilen mit den Lufteinlässen 40 und 43 wird für das von oben nach unten abbrennende Brennmaterial 6 stets eine ausreichende Luftzufuhr zur Verfügung gestellt, sodass es zu einer relativ geringen Gasfreisetzung und einem sehr gleichmäßigen Brennvorgang kommt. Durch die zueinander höhenversetzten Lufteinlässe 40, 43 an der Vorder- und Rückseite 7, 8 der erfindungsgemäßen Heizvorrichtung wird die Luft, die vom Lufteinlass 40 von einer Seite einströmt bei der Verbrennung jeweils auf der gerade obersten Ebene des Brennmaterials 6 erhitzt und gelangt entlang des durch einen Pfeil 110 angedeuteten schräg nach oben verlaufenden Pfades auf den gegenüberliegenden geschlossenen Flächenbereich 102 der Rückseite 8, der aufgrund der Höhenversetzung keine Lufteinlässe auf dieser Höhe aufweist, wodurch sich dieser Flächenbereich 102 stark erhitzt und dadurch lokal zum Aufglühen gebracht wird. Genauso wird ein entsprechender Flächenbereich 101 auf der gegenüberliegenden Vorderseite 7 durch die Strömung gemäß Pfeil 111 stark erhitzt und die Wärmestrahlung nach außen über die Vorderseite 7 und Rückseite 8 wird dadurch verstärkt.

## Patentansprüche

1. Heizvorrichtung (1) für den Außenbereich mit einer mit Brennmaterial befüllbaren Heizeinheit, die einen Heizkorpus (2) mit einem Brennraum (3) und Lufteinlässen (40, 41, 42, 43) zur Luftzufuhr in den Brennraum (3) umfasst, wobei der Heizkorpus (2) an seiner Oberseite eine Befüllöffnung (5) zum Befüllen mit Brennmaterial (6) aufweist, wobei im Betrieb das Brennmaterial (6) im oberen Bereich des Brennraumes (3) zündbar ist und das Verbrennen von oben nach unten erfolgt, **dadurch gekennzeichnet,**
- **dass** der Heizkorpus (2) eine Vorderseite (7) und eine Rückseite (8) umfasst, wobei die Lufteinlässe (40, 41, 42, 43) auf der Vorderseite (7) und auf der Rückseite (8) angeordnet sind,
- **dass** die Lufteinlässe (40, 41, 42, 43) an der Vorderseite (7) und an der Rückseite (8) matrixartig in vertikalen Lufteinlassreihen (71, 72, 73, 74) und horizontalen Lufteinlasszeilen (81, 82, 83, ....88, 91, 92, 93, ....98) angeordnet sind, wobei die oberste horizontale Lufteinlasszeile (81) im Wesentlichen eine obere Grenze des Brennraumes (3) und die maximale Füllhöhe (F) definiert,
- **dass** die horizontalen Lufteinlasszeilen (81, 82, 83,....88) der Vorderseite (7) und die horizontalen Lufteinlasszeilen (91, 92, 93,....98) der Rückseite (8) in der Höhe versetzt angeordnet sind, und
- **dass** der Abstand zwischen benachbarten Lufteinlässen (40, 41, 42, 43) ein Mehrfaches des Durchmessers der Lufteinlässe (40, 41, 42, 43) beträgt.

2. Heizvorrichtung nach Anspruch 1, **dadurch gekennzeichnet, dass** das Ausmaß v der Höhenversetzung der horizontalen Lufteinlasszeilen (81, 82, 83,....88) auf der Vorderseite (7) gegenüber den horizontalen Lufteinlasszeilen (91, 92, 93,....98) der Rückseite (8) im Wesentlichen gleich dem halben Vertikalabstand z zwischen den Lufteinlässen (40, 41, 42, 43) ist.

3. Heizvorrichtung nach Anspruch 1 oder 2, **dadurch gekennzeichnet, dass** an der Vorderseite (7) des Heizkorpus (2) zwei vertikale Lufteinlassreihen (71, 72) und an der Rückseite (8) des Heizkorpus (2) zwei vertikale Lufteinlassreihen (73, 74) ausgebildet sind.

4. Heizvorrichtung nach Anspruch 1, 2 oder 3, **dadurch gekennzeichnet, dass** die Vorder- und die Rückseite (7, 8) jeweils eine Primärheizfläche ausbilden, und dass die Vorder- und Rückseite verbindende Seitenflächen (17, 18) jeweils eine Sekundärheizfläche ausbilden, wobei auf den geschlossenen Flächenbereich der Primärheizfläche bezogen der Anteil der offenen Fläche der in der Primärheizfläche vorhandenen Einlasslöcher 0,3% bis 1,1% beträgt.

5. Heizvorrichtung nach Anspruch 3, **dadurch gekennzeichnet, dass** die Breite der Sekundärheizfläche gleich x und die Breite der Primärfläche gleich 2x ist, und dass der Vertikalabstand z zwischen den horizontalen Lufteinlasszeilen gleich x ist und der Horizontalabstand der vertikalen Lufteinlassreihen gleich x plus/minus 20% ist.

6. Heizvorrichtung nach einem der Ansprüche 1 bis 3, **dadurch gekennzeichnet, dass** der Heizkorpus (2) einen im Wesentlichen rechteckförmigen Querschnitt aufweist, und dass das Verhältnis von Höhe h des Brennraums zu Brennraumquerschnitt q größer als 10, vorzugsweise größer als 50, ist.

7. Heizvorrichtung nach einem der Ansprüche 5 oder 6, **dadurch gekennzeichnet, dass** der Durchmesser der Lufteinlässe A gleich 1/10 von x plus/minus 10% ist.

8. Heizvorrichtung nach einem der Ansprüche 1 bis 7, **dadurch gekennzeichnet, dass** der Heizkorpus (2) an seiner Oberseite eine abnehmbare Abdeckung (9) aufweist, wobei die abnehmbare Abdeckung (9) durch Abstandhalter (10) zur Oberkante des Heizkorpus (2) derart beabstandet angeordnet ist, dass eine Abzugsöffnung (11) zum Abziehen der Verbrennungsgase ausgebildet ist.

9. Heizvorrichtung nach einem der Ansprüche 1 bis 8, **dadurch gekennzeichnet, dass** der Heizkorpus (2) an einer im Boden (70) verankerbaren Stütze (15) befestigt ist, und dass der Heizkorpus (2) an der verankerbaren Stütze (15) abnehmbar durch Formschluss befestigt ist, wobei der Heizkorpus (2) eine Aufnahme (16) aufweist, mit der der Heizkorpus (2) auf die Stütze (15) aufsetzbar ist.

10. Heizvorrichtung nach einem der Ansprüche 1 bis 9, **dadurch gekennzeichnet, dass** der Heizkorpus an seiner Unterseite eine gelochte Platte oder einen Rost aufweist, um Asche abzuführen.

11. Heizvorrichtung nach einem der vorhergehenden Ansprüche, **dadurch gekennzeichnet, dass** das Brennmaterial Holzpellets sind.

12. Heizvorrichtung nach einem der vorhergehenden Ansprüche, **dadurch gekennzeichnet, dass** die Lufteinlässe (40, 41, 42, 43) kreisförmig sind, und dass der Durchmesser A in einem Bereich 8 mm (Öffnungsfläche 50 mm2) bis 16 mm (Öffnungsfläche 200 mm2) liegt, oder dass die Lufteinlässe quadratisch sind und die Öffnungsfläche im Bereich von 60 mm2 bis 260 mm2 liegt.

13. Heizvorrichtung nach einem der vorhergehenden Ansprüche, **dadurch gekennzeichnet, dass** das Verhältnis von Vertikalabstand z zwischen den Lufteinlässen (40, 41, 42, 43) und dem Durchmesser A der Lufteinlässe von 8 bis 12 beträgt.

14. Verwendung einer Heizvorrichtung nach einem der Ansprüche 1 bis 13 als Frostschutzvorrichtung zum Schutz von Pflanzen gegen Auswirkungen von Kälte und Frost oder als Terrassen- oder Gastgartenheizung.
